# EUROPEAN PATENT APPLICATION

(11) **EP 4 692 380 A1**
(43) Date of publication of application: **11.02.2026**
(21) Application number: 24780299.4
(22) Date of filing: 26.03.2024
(51) Int. Cl.: C21D 9/00, B60G 21/055, C21D 1/40, H05B 3/40

(54) **METHOD FOR MANUFACTURING STABILIZER, AND STABILIZER**

(30) Priority: 31.03.2023 JP 2023057985
(71) Applicant: NHK Spring Co., Ltd., Yokohama-shi, Kanagawa 236-0004 (JP)
(72) Inventor: MINO, Yoshinobu, Yokohama-shi, Kanagawa 236-0004 (JP); TAKAHASHI, Keita, Yokohama-shi, Kanagawa 236-0004 (JP); KUMAI, Shintaro, Yokohama-shi, Kanagawa 236-0004 (JP)
(74) Representative: AWA Sweden AB
(86) International application number: PCT/JP2024/011930
(87) International publication number: WO 2024/204187

(57) **Abstract**

According to an embodiment, a manufacturing method of a stabilizer includes performing a bend processing on a workpiece having a bar shape to form a curved portion in the workpiece, providing a conductor, which is electrically floating, to face an outer circumferential surface of a bend in the curved portion, attaching a pair of terminals connected to a power source, which is capable of supplying an alternating current, to the workpiece, and heating the workpiece by applying the alternating current to the workpiece via the pair of terminals.

## Description

### Technical Field

The present invention relates to a manufacturing method of a stabilizer and a stabilizer.

### Background Art

A suspension mechanism of a vehicle uses a stabilizer formed of a steel pipe or a solid rod-shaped steel material. In general, a stabilizer includes a torsion portion extending in a width direction of a vehicle, a pair of arm portions respectively provided at both end portions of the torsion portion. A mounting portion for attachment to the suspension mechanism is formed at a distal end of each arm portion.

In one example, a torsion portion of a stabilizer is supported on a vehicle body via a rubber bushing, and a mounting portion is coupled to a suspension arm of a suspension mechanism via a connecting member. In the stabilizer mounted in the suspension mechanism, the arm portion and the torsion portion function as a spring in response to a rolling behavior of the vehicle. This configuration can increase the roll rigidity of the vehicle.

In general, in the manufacturing of stabilizers, a rod-shaped workpiece is subjected to bend processing and then subjected to heat treatment such as quenching and tempering (for example, refer to Patent Literatures 1 to 4). These heat treatments include the following known methods: heating using a heating furnace; induction heating using a high-frequency coil; and electric heating by passing an electric current through the stabilizer to generate heat.

### Citation List

### Patent Literatures

Patent Literature 1: JP 2002-331326 A
Patent Literature 2: JP H10-297242 A
Patent Literature 3: JP H11-189022 A
Patent Literature 4: JP 6258243 B

### Summary of Invention

### Technical Problem

A stabilizer has a curved portion between a torsion portion and each of arm portions. For example, performing heating treatment on the stabilizer by electric heating causes temperature deviations in this curved portion. That is, electric currents tend to flow in the inner portion of the curved portion and thus the temperature of the inner portion readily rises. The occurrence of such temperature deviations may result in property deviations of the stabilizer after heat treatment at respective positions of the curved portion.

Thus, one objective of the present invention is to provide a manufacturing method of a stabilizer capable of improving the properties in the curved portion and a stabilizer with improved properties.

### Solution to Problem

According to an embodiment, a manufacturing method of a stabilizer includes performing a bend processing on a workpiece having a bar shape to form a curved portion in the workpiece, providing a conductor, which is electrically floating, to face an outer circumferential surface of a bend in the curved portion, attaching a pair of terminals connected to a power source, which is capable of supplying an alternating current, to the workpiece, and heating the workpiece by applying the alternating current to the workpiece via the pair of terminals.

For example, the conductor has a first portion, a second portion extending from the first portion, and a third portion extending from the first portion and facing the second portion. Further, the conductor is provided such that the workpiece is located between the second portion and the third portion and further the first portion faces the outer circumferential surface.

The conductor is preferably provided such that a distance between the conductor and the outer circumferential surface is less than or equal to an outer diameter of the workpiece. In one example, the conductor is provided such that a distance between the conductor and the outer circumferential surface is entirely constant. In another example, the conductor may be provided such that a distance between the conductor and the outer circumferential surface increases with increasing distance from a center of the curved portion. Further, the second portion and the third portion may be inclined such that an interval therebetween increases with increasing distance from the first portion.

For example, the workpiece having undergone the bend processing has a straight portion adjacent to the curved portion. In this case, the conductor may be provided to face at least a part of the straight portion.

A ferromagnetic body may be provided to face an inner circumferential surface of a bend in the curved portion.

According to another aspect of embodiments, a manufacturing method of a stabilizer includes performing a bend processing on a workpiece having a bar shape to form a first curved portion and a second curved portion in the workpiece, providing a conductor, which is electrically floating, to face an outer circumferential surface of a bend in the first curved portion, providing a ferromagnetic body to face an inner circumferential surface of a bend in the second curved portion, attaching a pair of terminals connected to a power source, which is capable of supplying an alternating current, to the workpiece, and heating the workpiece by applying the alternating current to the workpiece via the pair of terminals.

According to an embodiment, a stabilizer is adapted to be arranged in a suspension mechanism of a vehicle and comprises a torsion portion generating elastic restoring force, an arm portion extending in a direction different from that of the torsion portion, and a curved portion connecting the torsion portion with the arm portion. Further, a depth of a decarburization layer in the torsion portion from a surface of the torsion portion is 200 µm or less, and an absolute value of a difference between a grain size number of prior austenite grain boundaries of an outer circumferential surface of a bend in the curved portion and a grain size number of prior austenite grain boundaries of an inner circumferential surface of a bend in the curved portion is 2 or less.

For example, an austenite grain size number of the outer circumferential surface and an austenite grain size number of the inner circumferential surface are both 7 or more. Further, for example, an outer diameter of a steel material constituting the torsion portion, the arm portion, and the curved portion is 30 mm or more. More preferably, an absolute value of a difference between a grain size number of prior austenite grain boundaries of an outer circumferential surface of a bend in the curved portion and a grain size number of prior austenite grain boundaries of an inner circumferential surface of a bend in the curved portion is 1 or less.

### Advantageous Effects of Invention

The present invention can provide a manufacturing method of a stabilizer capable of improving properties in a curved portion and a stabilizer with improved properties.

### Brief Description of Drawings

FIG. 1 is a schematic perspective view showing a part of a vehicle comprising a stabilizer according to the first embodiment.
FIG. 2 is a schematic plan view of the stabilizer according to the first embodiment.
FIG. 3 is an enlarged view of a part of an arm portion which the stabilizer comprises.
FIG. 4 is a flowchart showing an example of a manufacturing method of the stabilizer according to the first embodiment.
FIG. 5 is a diagram showing a configuration example applicable to a quenching process.
FIG. 6 is a schematic cross-sectional view of a workpiece and a conductor during the manufacturing.
FIG. 7 is a schematic cross-sectional view of the workpiece and the conductor along the line VII-VII of FIG. 6.
FIG. 8 is a schematic cross-sectional view of a curved portion that the stabilizer comprises.
FIG. 9 is a schematic diagram to illustrate the proximity effect.
FIG. 10 is a diagram showing an example of a heating temperature distribution of the curved portion.
FIG. 11 is a graph showing heating temperatures and grain size numbers in quenching.
FIG. 12 is a schematic diagram showing temperature measurement positions indicated by plots in FIG. 11.
FIG. 13 is a cross-sectional view showing a vicinity of a surface layer of a torsion portion of the stabilizer.
FIG. 14 is a schematic cross-sectional view of a conductor and a workpiece according to the second embodiment.
FIG. 15 is a schematic cross-sectional view of the workpiece and the conductor along the line XV-XV of FIG. 14.
FIG. 16 is a diagram showing a configuration example applicable to quenching according to the third embodiment.
FIG. 17 is a schematic cross-sectional view showing a configuration of the curved portion and its vicinity in performing quenching according to the third embodiment.
FIG. 18 is a schematic cross-sectional view showing another shape applicable to a ferromagnetic body.
FIG. 19 is a view showing another layout of the ferromagnetic body.

### Mode for Carrying Out the Invention

Some embodiments will be described hereinafter with reference to the accompanying drawings.

### [First Embodiment]

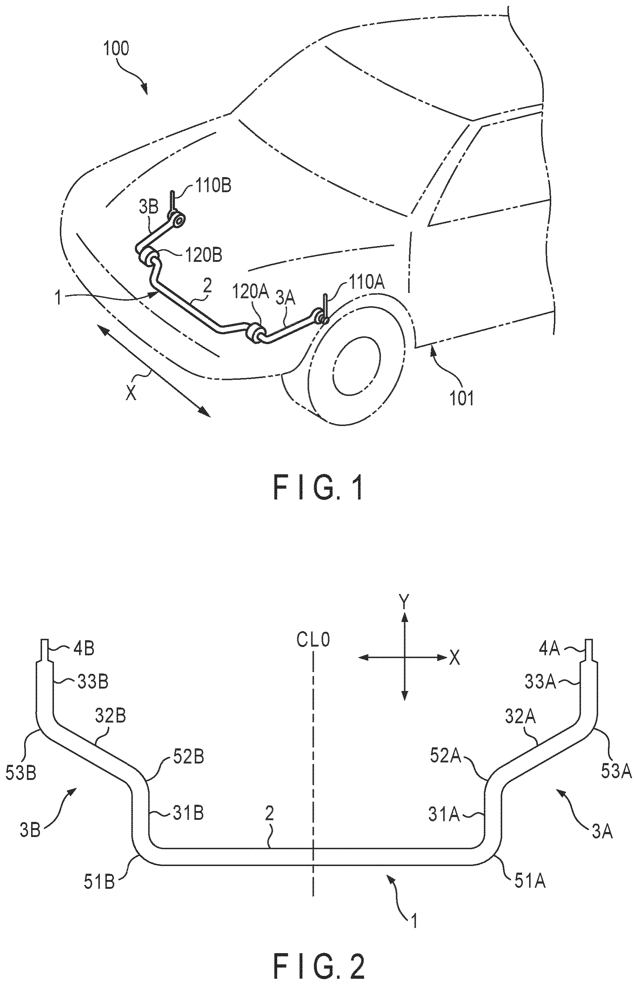

FIG. 1 is a schematic perspective view showing a portion of a vehicle 100 comprising a stabilizer 1 according to the first embodiment. The stabilizer 1 is coupled to a suspension mechanism of a vehicle body 101 via coupling members 110A and 110B. In the example of FIG. 1, support members 120A and 120B for supporting the stabilizer 1 on the vehicle body 101 are provided on the stabilizer 1. For example, the support members 120A and 120B may be rubber bushings.

The stabilizer 1 has a shape elongated in the first direction X. The first direction X corresponds to the width direction of the vehicle body 101. The present embodiment assumes that the stabilizer 1 is formed of hollow steel. The stabilizer 1 may be solid. For example, a resin-based coating film is formed on the surface of the stabilizer 1.

FIG. 2 is a schematic plan view of the stabilizer 1. The stabilizer 1 has a torsion portion 2, a pair of arm portions 3A and 3B, a pair of mounting portions 4A and 4B, and a pair of curved portions 51A and 51B.

The torsion portion 2 extends linearly in the first direction X. The mounting portion 4A is provided at the distal end of the arm portion 3A. The mounting portion 4B is provided at the distal end of the arm portion 3B. The mounting portions 4A and 4B are coupled to the respective coupling members 110A and 110B shown in FIG. 1. The arm portion 3A is connected to one end of the torsion portion 2 via the curved portion 51A. The arm portion 3B is connected to the other end of the torsion portion 2 via the curved portion 51B.

In the example of FIG. 2, the arm portion 3A has straight portions 31A, 32A, and 33A and curved portions 52A and 53A. The straight portion 31A extends in the second direction Y orthogonal to the first direction X from an end portion of the curved portion 51A. The straight portion 32A is connected to the straight portion 31A via the curved portion 52A and extends in a direction intersecting the first direction X and the second direction Y. The straight portion 33A is connected to the straight portion 32A via the curved portion 53A and extends in the second direction Y.

The stabilizer 1 has a planar shape line-symmetric with respect to a center line CLO parallel to the second direction Y. That is, the arm portion 3B has straight portions 31B, 32B, and 33B and curved portions 52B and 53B. The straight portion 31B extends from an end portion of the curved portion 51B in the second direction Y. The straight portion 32B is connected to the straight portion 31B via the curved portion 52B and extends in a direction intersecting the first direction X and the second direction Y. The straight portion 33B is connected to the straight portion 32B via the curved portion 53B and extends in the second direction Y.

Forces having opposite phases are input to the respective arm portions 3A and 3B during the vehicle 100 driving on a curve and the like. At this time, bending forces in opposite directions are applied to the respective arm portions 3A and 3B and bending and twisting forces are applied to the curved portions 51A and 51B. Thus, the torsion portion 2 is twisted. This generates a repulsive load for suppressing the rolling behavior of the vehicle body 101.

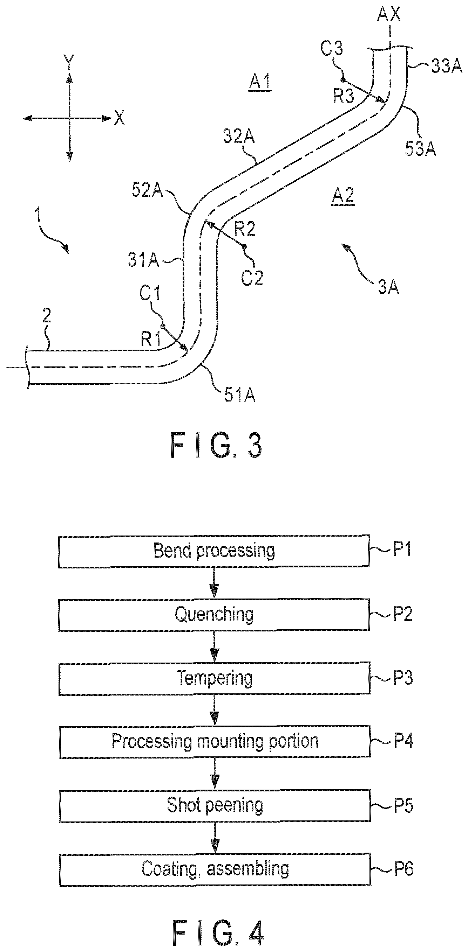

FIG. 3 is an enlarged view of a portion of the arm portion 3A. The stabilizer 1 according to the present embodiment has a symmetrical shape with respect to the center line CLO as described above. Thus, the arm portion 3B have the same configuration as that of the arm portion 3A. The chain line along the arm portion 3A in the figure indicates an axis AX of the stabilizer 1.

The present embodiment assumes that the entire axis AX is located on the X-Y plane defined by the first direction X and the second direction Y. The configuration of the stabilizer 1 is not limited to this example. The stabilizer 1 may be bent in three dimensions to include portions where the axis AX intersects the X-Y plane.

The following description defines two areas A1 and A2 separated from each other by the axis AX. The area A1 is the inner area of the bend in the entire stabilizer 1 and is located between the arm portions 3A and 3B in the first direction X. The area A2 is the outer area of the bend in the entire stabilizer 1.

The curved portions 51A, 52A, and 53A are smoothly curved with respective curvature radii R1, R2, and R3. A curvature radius center C1 of the curved portion 51A is located in the area A1. A curvature radius center C2 of the curved portion 52A is located in the area A2. A curvature radius center C3 of the curved portion 53A is located in the area A1. That is, the stabilizer 1 passes through between the curved radius centers C1 and C2. That is, the stabilizer 1 passes through between the curved radius centers C2 and C3. In the example of FIG. 3, the curvature radius R1 is smaller than the curvature radii R2 and R3. For example, the curvature radii R2 and R3 are equivalent to each other. The configuration is not limited to this example.

Next, the following describes a manufacturing method of the stabilizer 1.

FIG. 4 is a flowchart showing an example of a manufacturing method of the stabilizer 1 according to the present embodiment. In the manufacturing of the stabilizer 1, first, a rod-shaped workpiece is subjected to a bend processing (the process P1). Thus, the curved portions 51A, 52A, and 53A and the curved portions 51B, 52B, and 53B are formed on the workpiece as shown in FIG. 2. The workpiece is a hollow steel pipe in the present embodiment.

Next, the workpiece is subjected to quenching (the process P2). As will be described in detail later, the alternating current heating is used for this quenching. After the quenching, the workpiece is subjected to tempering (the process P3). The method of the tempering is not particularly limited. In one example, electric heating can be adopted.

After the tempering, the mounting portions 4A and 4B are formed on both end portions of the workpiece (the process P4). Further, the workpiece is subjected to the shot peening (the process P5). Subsequently, a coating film is formed on the surface and the support portions 120A and 120B are assembled (the process P6). The stabilizer 1 is completed through these processes.

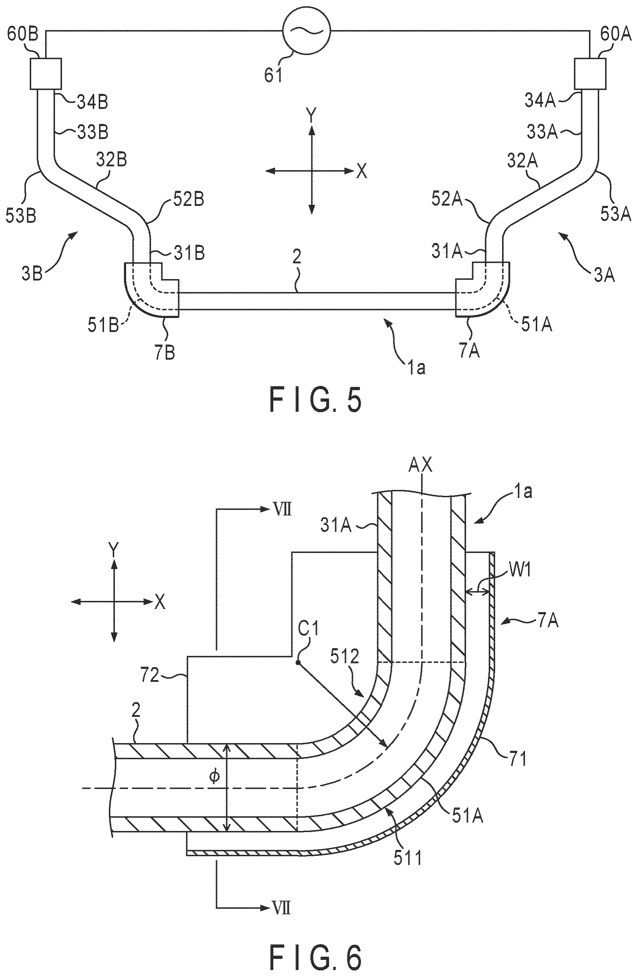

FIG. 5 is a diagram showing a configuration example applicable to the quenching in the process P2. In the quenching, conductors 7A and 7B are provided on the curved portions 51A and 51B of a workpiece 1a (a semi-finished stabilizer) that has undergone the process P1.

Furthermore, a first terminal 60A is attached to an end portion 34A of the arm portion 3A, and a second terminal 60B is attached to an end portion 34B of the arm portion 3B. These terminals 60A and 60B are connected to a power source 61 for supplying alternating currents. The frequency of the alternating currents supplied by the power source 61 is not limited. For example, a high frequency of 1 kHz or higher can be adopted.

The conductors 7A and 7B are electrically floating and are insulated from other conductive elements such as the workpiece 1a. The conductors 7A and 7B are supported, for example, by an insulating member (not shown). The conductors 7A and 7B may be formed of metal materials having excellent conductivity such as copper or aluminum. The conductors 7A and 7B may have a multilayer structure consisting of a conductive layer formed of a metal material and an insulating layer formed of a resin or the like.

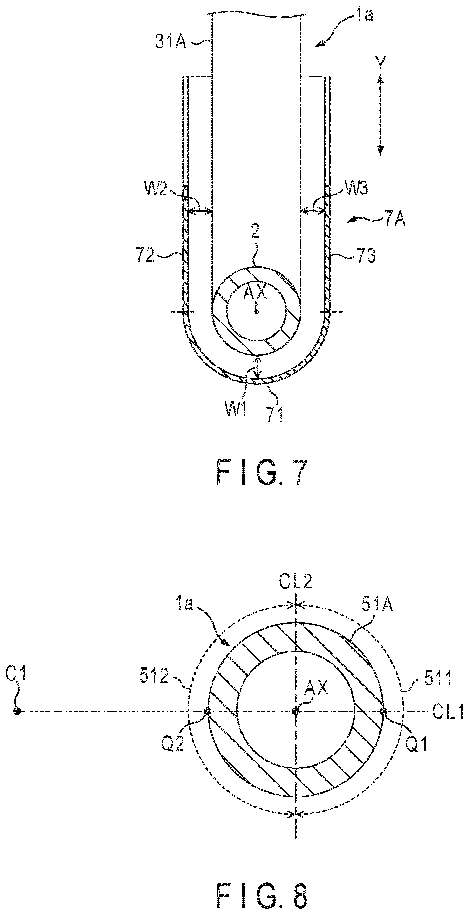

FIG. 6 is a schematic cross-sectional view of the workpiece 1a and the conductor 7A. FIG. 7 is a schematic cross-sectional view of the workpiece 1a and the conductor 7A along the line VII-VII of FIG. 6. FIG. 6 is a cross-sectional view of the workpiece 1a and the conductor 7A in the X-Y plane along the axis AX. FIG. 7 is a cross-sectional view of the workpiece 1a and the conductor 7A in the plane orthogonal to the first direction X.

As shown in FIG. 6, the curved portion 51A has an outer circumferential surface 511 and an inner circumferential surface 512. The outer circumferential surface 511 is a portion that is located on the outer circumferential side of the bend in the curved portion 51A of the surface of the workpiece 1a. The inner circumferential surface 512 is a portion that is located on the inner circumferential side of the bend in the curved portion 51A of the surface of the workpiece 1a.

FIG. 8 is a schematic cross-sectional view of the curved portion 51A for describing the outer circumferential surface 511 and the inner circumferential surface 512. The center line CL1 indicated by the broken lines is a line segment passing through the curvature radius center C1 and the axis AX of a curved portion 5A. A center line CL2, which is the other center line indicated by the broken lines, is a line segment orthogonal to the center line CL1 and passing through the axis AX. Positions Q1 and Q2 shown on the surface of the workpiece 1a are both points where the center line CL1 intersects the surface of the workpiece 1a. The position Q1 is farther from the curvature radius center C1 than the axis AX. The position Q2 is closer to the curvature radius center C1 than the axis AX. Each of the positions Q1 and Q2 corresponds to the outer shape of the cross section of the curved portion 51A shown in FIG. 6.

The outer circumferential surface 511 is the area that includes the position Q1 of the surface of the workpiece 1a. The inner circumferential surface 512 is the area that includes the position Q2 of the surface of the workpiece 1a. In one example, the surface on the position Q1 side relative to the center line CL2 can be defined as the outer circumferential surface 511, and the surface on the position Q2 side relative to the center line CL2 is defined as the inner circumferential surface 512.

The conductor 7A shown in FIG. 6 and FIG. 7 has a first portion 71, a second portion 72, and a third portion 73. FIG. 7 indicates the boundary between the first portion 71 and the second portion 72 and the boundary between the first portion 71 and the third portion 73 by broken lines.

As shown in FIG. 6, the first portion 71 faces the outer circumferential surface 511 with a gap. The first portion 71 is bent along the surface of the workpiece 1a. As shown in FIG. 7, the second portion 72 and the third portion 73 extend from the first portion 71. For example, the second portion 72 and the third portion 73 are parallel to the second direction Y. The workpiece 1a is provided between the second portion 72 and the third portion 73. Gaps are formed between the second portion 72 and the workpiece 1a and between the third portion 73 and the workpiece 1a as well. An insulating material may be provided between the conductor 7A and the workpiece 1a. This insulating material may be a component separated from the conductor 7A or may be formed integrally with the conductor 7A. Furthermore, the insulating material may be provided in the entire space between the conductor 7A and the workpiece 1a, or may be provided partially in the space.

The first portion 71, the second portion 72, and the third portion 73 face not only the curved portion 51A but also the straight portions (the torsion portion 2 and the straight portion 31A) connected to both end portions of the curved portion 51A via gaps. The conductor 7A does not have a portion that faces the inner circumferential surface 512 in the radial direction from the curvature radius center C1 toward the axis AX.

In the example of FIG. 6, a width W1 of the gap between the first portion 71 and the workpiece 1a (the distance between the surfaces of the first portion 71 and the workpiece 1a) is entirely constant. In the example of FIG. 7, a width W2 of the gap between the second portion 72 and the workpiece 1a (the distance between the surfaces of the second portion 72 and the workpiece 1a) is entirely constant. Similarly, a width W3 of the gap between the third portion 73 and the workpiece 1a (the distance between the surfaces of the third portion 73 and the workpiece 1a) is also entirely constant. For example, the widths W1, W2, and W3 are equivalent to each other but may be different from each other.

The widths W1, W2, and W3 are smaller than the outer diameter φ of the workpiece 1a (steel material constituting the torsion portion 2, the arm portions 3A and 3B, the curved portions 51A and 51B, and the like) and are preferably less than or equal to the half of the outer diameter φ. For example, the outer diameter φ is 30 mm or more. In one example, the outer diameter φ is 38 mm, and the widths W1, W2, and W3 are 8 mm.

The configuration and layout of the conductor 7B are the same as those of the conductor 7A. For example, in setting the workpiece 1a and the conductors 7A and 7B to satisfy the state shown in FIG. 5, the workpiece 1a is moved relative to the fixedly provided conductors 7A and 7B and is positioned to achieve the positional relationship shown in FIG. 6 and FIG. 7.

When the workpiece 1a is heated, an alternating current is supplied from the power source 61 to the circuit including the power source 61, the terminals 60A and 60B, and the workpiece 1a. Thus, the workpiece 1a generates heat and quenched. The frequency, amplitude, and time of applying of the alternating current can be appropriately determined according to the target temperature for heating and the like. After heating, the workpiece 1a is cooled. This cooling may be natural cooling. If rapid cooling is required, cooling may be performed by exposing the workpiece 1a to a liquid such as water or by spraying a gas such as air or a liquid such as water onto the workpiece 1a.

When alternating currents flow through the workpiece 1a, the skin effect occurs. This increases the current density of the vicinity of the surface of the workpiece 1a. Furthermore, in each of the curved portions, the current density in the vicinity of the inner circumferential surface is apt to increase due to its short current path passing through the vicinity of the inner circumferential surface of a bend. Thus, the heating temperature in the vicinity of the inner circumferential surface is higher than that in the vicinity of the outer circumferential surface. This temperature difference can be significant when the curvature radii of the curved portions 51A and 51B are small, when the bending angle is large, or when the diameter of the workpiece 1a is large.

The following describes the function of the conductors 7A and 7B. What is called the proximity effect occurs when electric current flows through a workpiece such as the workpiece 1a and an electrically floating conductor is provided in its vicinity. In the quenching process shown in FIG. 5, this proximity effect is used to control the current density distribution (the heating temperature distribution) of the workpiece 1a. That is, the conductors 7A and 7B are provided at positions where the proximity effect occurs in the workpiece 1a.

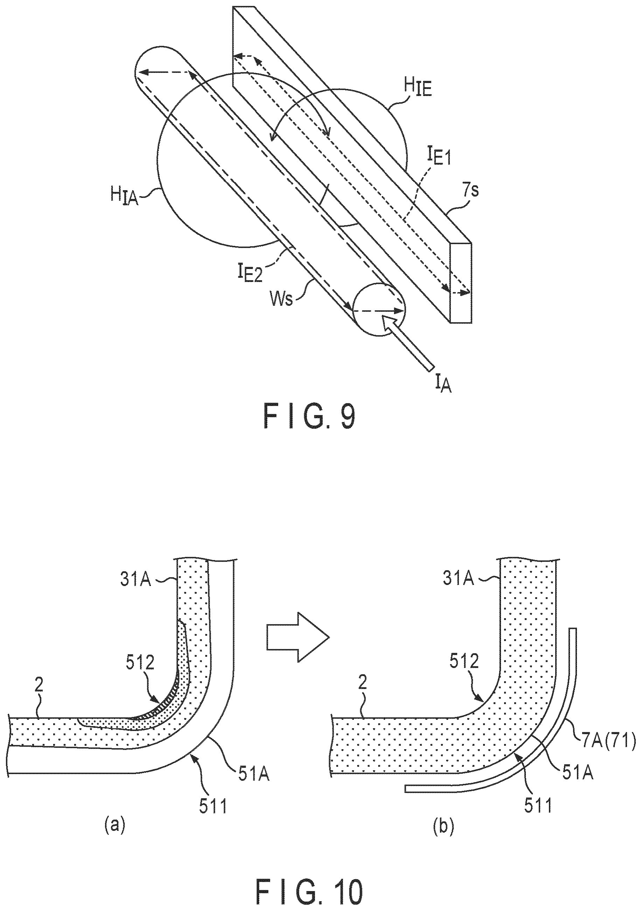

FIG. 9 is a schematic diagram to illustrate the proximity effect, showing a bar-shaped workpiece Ws and a conductor 7s provided in its vicinity. When a current I_{A} from the power source flows to the workpiece Ws, a magnetic field H_{IA} is generated around the workpiece Ws (Ampere's law).

In the conductor 7s, an eddy current I_{E1} is generated due to this magnetic field H_{IA} (Lenz's law). Furthermore, a magnetic field H_{IE} is generated around the conductor 7s due to the eddy current I_{E1}. When this magnetic field H_{IE} acts on the workpiece Ws, an eddy current I_{E2} is generated in the workpiece Ws.

The directions of flow of the current I_{A}, the eddy current I_{E1}, and the eddy current I_{E2} are indicated by the arrows in the figure. In other words, in the workpiece Ws, the current I_{A} and the eddy current I_{E2} flow in directions opposite to each other in the vicinity of the side surface that is farther from the conductor 7s. In contrast, the current I_{A} and the eddy current I_{E2} flow in the same direction in the vicinity of the side surface closer to the conductor 7s. Thus, the current density of the workpiece Ws is higher in the vicinity of the side surface closer to the conductor 7s. Utilizing this proximity effect enables controlling the current density distribution and the heating temperature distribution of the workpiece Ws.

FIG. 10 shows examples of the heating temperature distribution in the curved portion 51A (a) when the alternating current heating is performed without providing the conductor 7A and (b) when the alternating current heating is performed with providing the conductor 7A. The darker the hatching in the figure, the higher the temperature.

When the conductor 7A is not provided, the current density near the inner circumferential surface 512 increases as described above. Thus, as shown in FIG. 10 (a), the vicinity of the inner circumferential surface 512 is heated at a higher temperature than the vicinity of the outer circumferential surface 511.

On the other hand, when the conductor 7A is provided, the proximity effect attracts currents to the outer circumferential surface 511. Thus, the heating temperatures can be unified as shown in FIG. 10 (b).

In FIG. 10 (a), heating temperature deviations occur not only in the curved portion 51A but also in the torsion portion 2 and the straight portion 31A therearound. In this case, the conductor 7A facing a portion of the torsion portion 2 and the straight portion 31A as shown in FIG. 6 can unify the heating temperatures in the torsion portion 2 and the straight portion 31A. In the vicinity of the curved portion 51B as well, the conductor 7B achieves the same effect as the one in the vicinity of the curved portion 51A.

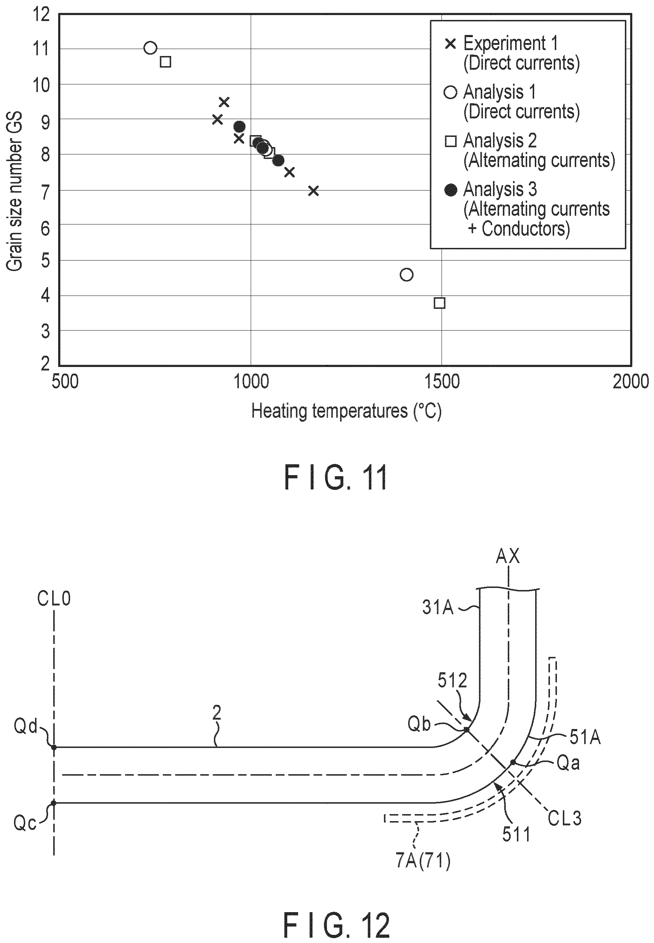

FIG. 11 is a graph showing heating temperatures [°C] in quenching and grain size numbers of the prior austenite grain boundaries of the stabilizer 1 manufactured by this quenching. Among the four plots, the experiment 1 and the analysis 1 involve electric heating using direct currents, while the analyses 2 and 3 involve electric heating using alternating currents. Additionally, the analysis 3 assumes the case where the conductors 7A and 7B are provided. The grain size numbers of the prior austenite grain boundaries in the present embodiment can be measured using the method specified in JISG0551.

FIG. 12 is a schematic diagram showing temperature measurement positions Qa, Qb, Qc, and Qd indicated by the plots of the experiment 1 and the analysis 1-3 in FIG. 11. The position Qa is the intersection of a center line CL3 of the curved portion 51A and the outer circumferential surface 511. The position Qb is the intersection of the center line CL3 and the inner circumferential surface 512. The center line CL3 is located at the midpoint of the length along the axis AX of the curved portion 51A and a line segment orthogonal to the axis AX. Each of the positions Qc and Qd is the intersection of the center line CLO (refer to FIG. 2) and the surface of the torsion portion 2. The center line CL0 also is a line segment orthogonal to the axis AX.

In FIG. 11, among the four plots in the experiment 1, the plot with the lowest heating temperature corresponds to the position Qa, the plot with the highest heating temperature corresponds to the position Qb, and the remaining plots correspond to the respective positions Qc and Qd. Generally, the higher heating temperature, the smaller (the coarser) the grain size number. An approximate expression of the particle size number for the heating temperature is prepared based on the plots in the experiment 1 and used to derive the particle size numbers in the analyses 1 to 3.

In FIG. 11, among the plots in each of the analyses 1 and 2, the plot with the lowest heating temperature corresponds to the position Qa, the plot with the highest heating temperature corresponds to the position Qb, and the remaining plots correspond to the respective positions Qc and Qd. Due to direct current application, the analysis 1 has no temperature deviations in the positions Qc and Qd of the straight portion (the torsion portion 2). However, in the analysis 1, current tends to flow inward in the bending portion (the curved portion 51A), causing the inner circumferential surface 512 to be heated preferentially. This configuration results in large temperature deviations at the positions Qa and Qb. In the analysis 2, the alternating current heating is performed without providing the conductors 7A and 7B. Thus, the vicinity of the inner circumferential surface 512 is further preferentially heated compared to the analysis 1. This configuration results in large temperature deviations at the positions Qa, Qb, Qc, and Qd.

In contrast, in the analysis 3, the temperature deviations in the positions Qa, Qb, Qc, and Qd are significantly smaller than the experiment 1 and the analyses 1 and 2. For example, in the analysis 2, which does not use the conductors 7A and 7B, the plots are scattered over a wide range with a distribution width exceeding 500°C. In contrast, in the analysis 3 using the conductors 7A and 7B, the distribution width in the positions Qa, Qb, Qc, and Qd is smaller than 200°C. This indicates that using the conductors 7A and 7B can greatly unify the heating temperatures.

Further, this unified heating temperatures result in significantly small differences in grain size numbers at the positions Qa, Qb, Qc, and Qd in the analysis 3. Specifically, in FIG. 11, the absolute value of the differences in the grain size numbers at the positions Qa, Qb, Qc, and Qd is 2 or less. This indicates that the stabilizer 1 with the uniform crystal grain size can be achieved by the quenching process according to the present embodiment (the analysis 3). Further, using the manufacturing method of the present embodiment can further decrease the differences in the grain size number at the positions Qa, Qb, Qc, and Qd. In one example, adjusting the shape and arrangement of the conductors 7A and 7B can manufacture the stabilizer 1 in which the absolute value of the differences in the grain size numbers at the positions Qa, Qb, Qc, and Qd is 1 or less.

In general, the larger the grain size number, (i.e., the smaller the crystal grain size), the higher the yield strength. For example, as in the experiment 1 and the analyses 1 and 2, when the heating temperatures differ greatly between the outer peripheral surface 511 and the inner peripheral surface 512, for the entire workpiece 1a to be quenched, the entire workpiece has to be heated at a sufficiently high temperature such that the vicinity of the outer peripheral surface 511, which is difficult to heat, is quenched. Thus, the vicinity of the inner peripheral surface 512, which is easier to heat, is heated at an excessively high temperature. This results in coarsening the grain size and decreasing the yield strength. Further, the heating becomes excessive and thus decreases heating efficiency. In contrast, when the heating temperatures are unified as in the present embodiment (the analysis 3), areas heated at excessively high temperatures are less likely to form. This suppresses the coarsening of the grain size in the vicinity of the inner circumferential surface 512 and improving the heating efficiency.

In the alternating current heating, the workpiece 1a itself generates heat. Thus, heating efficiency increases compared to heating the workpiece 1a using a heating furnace. In addition, the alternating current heating enables rapid heating than when using a heating furnace. From this perspective as well, the heating efficiency is expected to improve. Furthermore, rapid heating is expected to refine the crystal grains. As shown in FIG. 11, the grain size numbers at the positions Qa, Qb, Qc, and Qd in the analysis 3 are all 7 or higher. This indicates that the crystal grains are refined overall compared to the analyses 1 and 2.

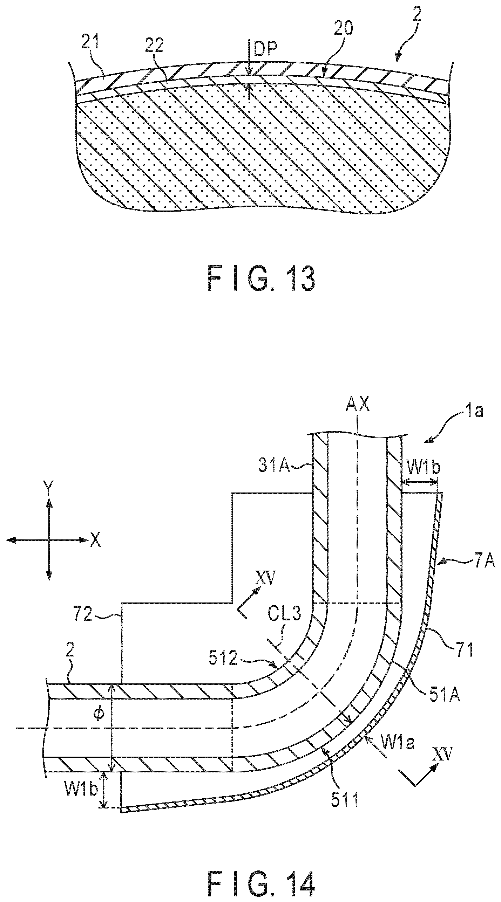

FIG. 13 is a cross-sectional view showing the vicinity of the surface layer of the torsion portion 2. In the example shown in this figure, a surface 20 of the torsion portion 2 is covered with a coating film 21. Furthermore, a decarburization layer 22 is formed in the vicinity of the surface 20.

Using the alternating current heating can enable rapid heating of the workpiece 1a. Thus, the generation of the decarburization layer 22 can be suppressed compared to when using a heating furnace, for example. In the present embodiment, a depth DP of the decarburization layer 22 from the surface 20 is 200 µm or less. Here, the depth DP corresponds to the total decarburization layer depth that can be measured by the method specified in JISG0558.

In this manner, the present embodiment performs the quenching using the alternating current heating to achieve the stabilizer 1 with the reduced decarburization layer 22 and excellent hardness.

Various other favorable effects can be obtained from the embodiment.

### [Second Embodiment]

The following describes the second embodiment. The present embodiment discloses other configurations applicable to the conductors 7A and 7B. The configurations other than those of the conductors 7A and 7B are the same as those of the first embodiment.

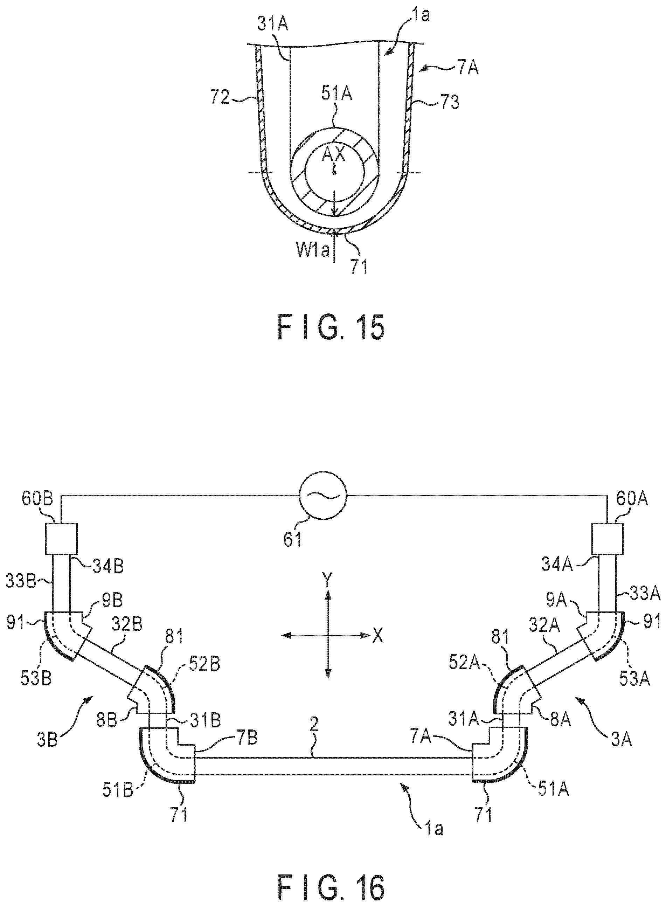

FIG. 14 is a schematic cross-sectional view of the conductor 7A and the workpiece 1a according to the second embodiment. FIG. 15 is a schematic cross-sectional view of the workpiece 1a and the conductor 7A along the line XV-XV of FIG. 14. Similarly to FIG. 6, FIG. 14 is a cross-sectional view of the workpiece 1a and the conductor 7A in the X-Y plane along the axis AX. FIG. 15 is a cross-sectional view of the workpiece 1a and the conductor 7A in the plane parallel to the center line CL3 and orthogonal to the axis AX.

The example of FIG. 14 differs from the example of FIG. 6 in that the width of a gap between the first portion 71 and the workpiece 1a is not constant. Specifically, the gap increases in its size with increasing distance from the center of the curved portion 51A (the portion along the center line CL3). Thus, the gap has a minimum width W1a in the portion along the center line CL3 and a maximum width W1b at both end portions facing the torsion portion 2 and the straight portion 31A. The width W1a is smaller than the outer diameter φ of the workpiece 1a and is preferably less than or equal to the half of the outer diameter φ. In the example of FIG. 14, the width W1b also is smaller than the outer diameter φ. The configuration is not limited to this example.

As shown in FIG. 15, the second portion 72 and the third portion 73 are not parallel to each other in the conductor 7A according to the present embodiment. The second portion 72 and the third portion 73 are inclined such that the interval therebetween increases with increasing distance from the first portion 71.

As shown in FIG. 10, when the alternating current heating is performed without using the conductor 7A, the inner circumferential surface 512 in the vicinity of the center of the curved portion 51A becomes hot. Further, the temperature of the inner circumferential surface 512 decreases with decreasing distance to the torsion portion 2 and the straight portion 31A. The configuration of the conductor 7A according to the present embodiment is effective in reducing such heating deviations.

That is, the smaller the gap between the conductor 7A and the workpiece 1a, the stronger the proximity effect. In light of this point, adjusting the gap between the conductor 7A and the workpiece 1a in accordance with the temperature distribution that may occur when performing the alternating current heating without using the conductor 7A is expected to further unify the heating temperature.

### [Third Embodiment]

The following describes the third embodiment. The present embodiment discloses other arrangements of the conductors in the alternating current heating. The configurations other than the arrangement of the conductors are the same as those of the first and second embodiments.

FIG. 16 is a diagram showing a configuration example applicable to quenching according to the third embodiment. As in the example of FIG. 5, the conductors 7A and 7B are provided in the respective curved portions 51A and 51B. Further, conductors 8A and 8B are provided in the respective curved portions 52A and 52B, and conductors 9A and 9B are provided in the respective curved portions 53A and 53B.

The same configurations as those of the conductors 7A and 7B are applicable to the conductors 8A, 8B, 9A, and 9B. That is, the conductors 8A and 8B have first portions 81 facing the outer circumferential surfaces of the respective curved portions 52A and 52B.
Further, the conductors 9A and 9B have first portions 91 facing the outer circumferential surfaces of the respective curved portions 53A and 53B. The conductors 8A, 8B, 9A, and 9B have portions corresponding to the second portion 72 and the third portion 73 of the conductors 7A and 7B as well.

When the alternating current heating is performed in this configuration in which the conductors 8A, 8B, 9A, and 9B are provided, the heating temperatures and grain sizes can be unified not only in the curved portions 51A and 51B but also in the curved portions 52A, 52B, 53A, and 53B.

### [Fourth Embodiment]

The following describes the fourth embodiment. The present embodiment discloses other examples applicable to quenching using the alternating current heating. The configurations other than the arrangement of the conductors are the same as those of the first and second embodiments.

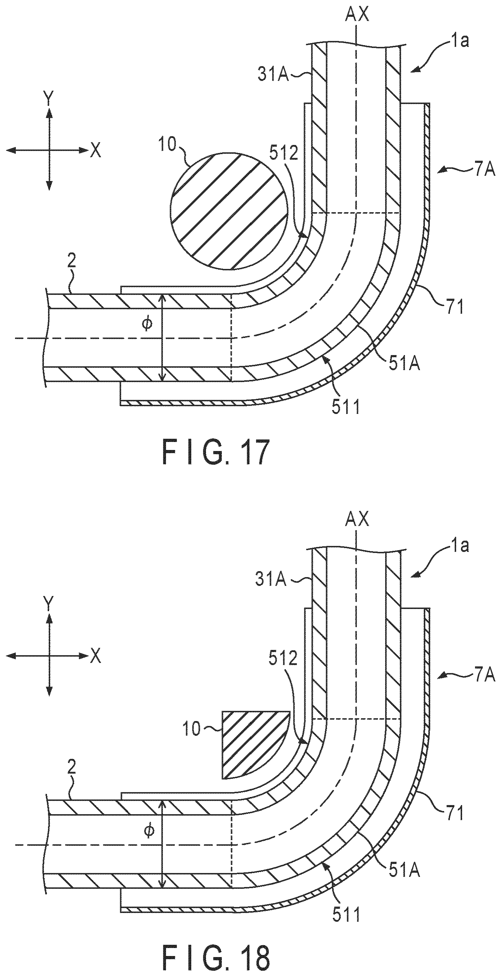

FIG. 17 is a schematic cross-sectional view showing a configuration of the curved portion 51A and its vicinity in performing quenching according to the present embodiment. Similarly to FIG. 6, FIG. 17 is a cross-sectional view of the workpiece 1a and the conductor 7A in the X-Y plane along the axis AX.

In the example of FIG. 17, a ferromagnetic body 10 is provided in addition to the conductor 7A. For example, the ferromagnetic body 10 is formed of ferrite. The configuration is not limited to this example. For example, the ferromagnetic body 10 has a columnar shape extending in a direction orthogonal to the first direction X and the second direction Y and faces the inner peripheral surface 512 via a gap. For example, this gap is smaller than the outer diameter φ of the workpiece 1a.

The ferromagnetic body 10 affects the magnetic flux generated at the time of applying current to the workpiece 1a and has the function of inducing the current density to the outer circumferential surface 511. Using the magnetic flux induction function of the ferromagnetic body 10 in addition to the proximity effect by the conductor 7A enables more precise control of the heating temperature of the workpiece 1a. If the influence of the ferromagnetic body 10 extends over an excessively wide area, a shield may be provided in the vicinity of the workpiece 1a to suppress the influence of the ferromagnetic body 10.

FIG. 18 is a schematic cross-sectional view showing another shape applicable to the ferromagnetic body 10. In the example shown in this figure, the ferromagnetic material 10 has a fan-shaped cross-sectional shape. The curved surface portion of the ferromagnetic body 10 faces the inner circumferential surface 512 via a gap. In addition to this shape, various shapes are applicable to the ferromagnetic body 10.

The ferromagnetic body 10 shown in FIG. 17 and FIG. 18 is provided in the vicinity of the curved portion 51B as well. The ferromagnetic body 10 may be provided in the vicinity of each of the other curved portions 52A, 52B, 53A, and 53B.

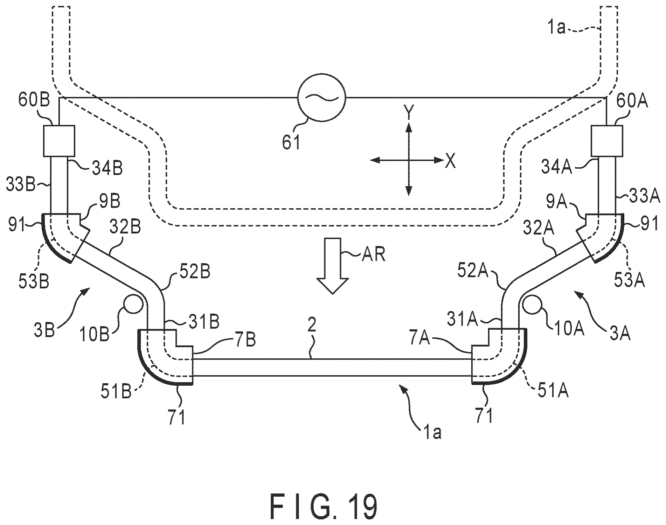

FIG. 19 is a view showing another layout of the ferromagnetic body 10. In the example of this figure, as in the example of FIG. 16, the conductors 7A, 7B, 9A, and 9B are provided for the respective curved portions 51A, 51B, 53A, and 53B (the first curved portions). Furthermore, ferromagnetic bodies 10A and 10B are provided for the respective curved portions 52A and 52B (the second curved portions).

The first portions 71 of the conductors 7A and 7B face the outer circumferential surfaces of the bends of the respective curved portions 51A and 51B via gaps. The first portions 91 of the conductors 9A and 9B face the outer circumferential surfaces of the bends of the respective curved portions 53A and 53B via gaps. The ferromagnetic bodies 10A and 10B face the inner circumferential surfaces of the bends of the respective curved portions 52A and 52B via gaps.

This arrangement of the conductors 7A, 7B, 9A, and 9B and the ferromagnetic bodies 10A and 10B enables shifting the workpiece 1a shown by the broken lines in the direction indicated by an arrow AR to be set in the heating position. This simplifies the operations for positioning the workpiece 1a and thus improves manufacturing efficiency of the stabilizer 1.

In addition to the first to fourth embodiments, the configuration and arrangement of the conductors and ferromagnetic bodies used for alternating current heating of the workpiece 1a may be modified in various aspects. Furthermore, the alternating current heating disclosed in each embodiment may also be used for the heat treatment of the workpiece 1a other than the quenching.

### Reference Signs List

1 ... Stabilizer, 2 ... Torsion portion, 3A, 3B ... Arm portion, 51A, 51B ... Curved portion, 7A, 7B ... Conductor, 10 ... Ferromagnetic body, 60A, 60B ... Terminal, 61 ... Power source, 71 ... First portion, 72 ... Second portion, 73 ... Third portion.

## Claims

1. A manufacturing method of a stabilizer, comprising:
performing a bend processing on a workpiece having a bar shape to form a curved portion in the workpiece;
providing a conductor, which is electrically floating, to face an outer circumferential surface of a bend in the curved portion;
attaching a pair of terminals connected to a power source, which is capable of supplying an alternating current, to the workpiece; and
heating the workpiece by applying the alternating current to the workpiece via the pair of terminals.

2. The manufacturing method of the stabilizer of claim 1, wherein
the conductor has:
a first portion;
a second portion extending from the first portion; and
a third portion extending from the first portion and facing the second portion, and
the conductor is provided such that the workpiece is located between the second portion and the third portion and further the first position faces the outer circumferential surface.

3. The manufacturing method of the stabilizer of claim 1, wherein
the conductor is provided such that a distance between the conductor and the outer circumferential surface is less than or equal to an outer diameter of the workpiece.

4. The manufacturing method of the stabilizer of claim 3, wherein
the conductor is provided such that a distance between the conductor and the outer circumferential surface is entirely constant.

5. The manufacturing method of the stabilizer of claim 1, wherein
the conductor is provided such that a distance between the conductor and the outer circumferential surface increases with increasing distance from a center of the curved portion.

6. The manufacturing method of the stabilizer of claim 2, wherein
the second portion and the third portion are inclined such that an interval therebetween increases with increasing distance from the first portion.

7. The manufacturing method of the stabilizer of claim 1, wherein
the workpiece having undergone the bend processing has a straight portion adjacent to the curved portion, and
the conductor is provided to face at least a part of the straight portion.

8. The manufacturing method of the stabilizer of any one of claims 1 to 7, further comprising:
providing a ferromagnetic body to face an inner circumferential surface of a bend in the curved portion.

9. A manufacturing method of a stabilizer, comprising:
performing a bend processing on a workpiece having a bar shape to form a first curved portion and a second curved portion in the workpiece;
providing a conductor, which is electrically floating, to face an outer circumferential surface of a bend in the first curved portion;
providing a ferromagnetic body to face an inner circumferential surface of a bend in the second curved portion;
attaching a pair of terminals connected to a power source, which is capable of supplying an alternating current, to the workpiece; and
heating the workpiece by applying the alternating current to the workpiece via the pair of terminals.

10. A stabilizer having a curved portion and adapted to be arranged in a suspension mechanism of a vehicle, the stabilizer comprising:
a torsion portion generating elastic restoring force;
an arm portion extending in a direction different from that of the torsion portion; and
a curved portion connecting the torsion portion with the arm portion, wherein
a depth of a decarburization layer in the torsion portion from a surface of the torsion portion is 200 µm or less, and
an absolute value of a difference between a grain size number of prior austenite grain boundaries of an outer circumferential surface of a bend in the curved portion and a grain size number of prior austenite grain boundaries of an inner circumferential surface of a bend in the curved portion is 2 or less.

11. The stabilizer of claim 10, wherein
an austenite grain size number of the outer circumferential surface and austenite grain size number of the inner circumferential surface are both 7 or more.

12. The stabilizer of claim 10, wherein
an outer diameter of a steel material constituting the torsion portion, the arm portion, and the curved portion is 30 mm or more.

13. The stabilizer of any one of claims 10 to 12, wherein
an absolute value of a difference between a grain size number of prior austenite grain boundaries of an outer circumferential surface of a bend in the curved portion and a grain size number of prior austenite grain boundaries of an inner circumferential surface of a bend in the curved portion is 1 or less.
